# EUROPÄISCHE PATENTSCHRIFT

(11) **EP 2 216 192 B1**
(45) Veröffentlichungstag und Bekanntmachung des Hinweises auf die Patenterteilung: **02.04.2014**
(21) Anmeldenummer: 09174590.1
(22) Anmeldetag: 30.10.2009
(51) Int. Cl.: B60G 17/052, B60G 17/04

(54) **Niveauregelanlage für ein Fahrzeug**
Levelling system for a vehicle
Dispositif de réglage du niveau pour un véhicule

(30) Priorität: 28.01.2009 DE 102009003395
(43) Veröffentlichungstag der Anmeldung: 11.08.2010
(73) Patentinhaber: Continental Teves AG & Co. OHG, 60488 Frankfurt (DE)
(72) Erfinder: Kahl, Andreas, 29320, Hermannsburg (DE)

(56) Entgegenhaltungen:
- EP-A1- 1 442 903
- WO-A1-2005/035283
- DE-A1- 3 919 438
- DE-A1- 10 038 266
- DE-A1- 19 515 895

## Beschreibung

### Niveauregelanlage für ein Fahrzeug

Die Erfindung betrifft ein Verfahren zum Trocknen der Druckluft in einer Niveauregelanlage eines Fahrzeuges, welche einen Kompressor, einen Lufttrockner, einen Drucksensor, einen Druckmittelvorratsbehälter und eine Druckmittelkammer aufweist.

Eine pneumatische Niveauregelanlage der eingangs genannten Art ist aus der DE10038266A1 bekannt. Die aus dieser Druckschrift bekannte Niveauregelanlage weist einen Kompressor, einen Lufttrockner, einen Drucksensor, einen Druckmittelvorratsbehälter und eine Druckmittelkammer auf, wobei der Auffüllvorgang des Druckmittelvorratsbehälters oder der Druckmittelkammer in Abhängigkeit einer kritischen Feuchtigkeitsmenge in dem Lufttrockner jedes Mal unterbrochen wird und ein Teil der während des Auffüllvorganges getrockneten Luft über den Lufttrockner in die Atmosphäre abgelassen wird sowie nach dem Ablassen der Auffüllvorgang fortgesetzt wird.

Aus der DE102004038711A1 ist eine Geschlossene Niveauregelanlage für ein Fahrzeug mit einem Kompressor, einem Lufttrockner, einem Drucksensor, einem Druckmittelvorratsbehälter und einer Druckmittelkammer bekannt, bei der Druckluft aus einer Druckmittelkammer über den Kompressor und ein Bypassventil in den Druckmittelvorratsbehälter überführt werden kann. Hierbei wird maximal ein geringer Teil des Luftstromes aus der entsprechenden Druckmittelkammer über den Lufttrockner geführt. Durch die Überbrückung des Bypassventils wird sichergestellt, dass bei einem Entleeren einer Druckmittelkammer keine Luftfeuchtigkeit aus dem Lufttrockner in den Druckluftspeicher überführt wird und sich später in der Niveauregelanlage verteilt.

Die EP 1 442 903 A1 offenbart ein Verfahren zum Betrieb einer Luftfederungsanlage mit einer Druckluft-Förderungseinrichtung und einer Ventilanordnung zur Steuerung der Befüllung der Luftfedern, wobei die wirksame Förderleistung der Druckluft-Förderungseinrichtung in Abhängigkeit von der mittels der Ventilanordnung gewählten Art der Befüllung der Luftfederbälge automatisch gesteuert wird.

Ferner beschreibt die WO 2005/035283 A1 ein Verfahren zur Regelung der Luftmenge in einer Niveauregelanlage für ein Kraftfahrzeug, bei welchem zur Regelung der Luftmenge zwei Luftmengenintervalle vorgegeben werden, wobei das erste Luftmengenintervall vollständig innerhalb des zweiten Luftmengenintervalls liegt. Wenn die Luftmenge in der Niveauregelanlage außerhalb des Luftmengenintervalls liegt, erfolgt auf jeden Fall eine Regelung in das Luftmengenintervall hinein. Liegt die Luftmenge jedoch außerhalb des ersten Luftmengenintervalls und innerhalb des zweiten Luftmengenintervalls, so erfolgt eine Regelung der Luftmenge in das erste Luftmengenintervall hinein nur im Betrieb des Kraftfahrzeuges.

Aufgabe der Erfindung ist es, ein verbessertes und kostengünstiges Verfahren zur Regeneration des Lufttrockners bereitzustellen.

Diese Aufgabe wird erfindungsgemäß durch die Merkmale des Anspruchs 1 gelöst. Dabei wird ein zusätzlicher Lufttrockner-Spülzyklus mit den folgenden Verfahrensschritten durchgeführt:
a) unterhalb einer Grenzbedingung ein Lufttrockner-Spülzyklus eingeleitet wird, wobei als Grenzbedingung eine vorgegebene Umgebungstemperatur, ein vorgegebener Umgebungsdruck, eine vorgegebene Umgebungsfeuchtigkeit oder eine vorgegebene Luftfeuchtigkeit bzw. eine vorgegebene Temperatur der Ansaugluft des Kompressors vorgesehen ist,
b) der Druck in dem Druckmittelvorratsbehälter wird ermittelt,
c) wenn der Druck in dem Druckmittelvorratsbehälter einen ersten Grenzwert überschreitet, wird Druckluft über den Lufttrockner bis zu einem zweiten Grenzwert des Druckes in dem Druckmittelvorratsbehälter in die Atmosphäre abgelassen, oder
d) wenn der Druck in dem Druckmittelvorratsbehälter einen ersten Grenzwert unterschreitet, wird Druckluft von dem Kompressor über den Lufttrockner in den Druckmittelvorratsbehälter bis zu einem dritten Grenzwert des Druckes in dem Druckmittelvorratsbehälter gefördert und anschließend Druckluft von dem Druckmittelvorratsbehälter über den Lufttrockner bis zu einem zweiten Grenzwert des Druckes in dem Druckmittelvorratsbehälter in die Atmosphäre abgelassen.

Der Vorteil der Erfindung ist darin zu sehen, dass die im Normalfall unbekannte Teilbeladung des Trockenmediums des Lufttrockners mit Feuchtigkeit durch den zusätzlichen Lufttrockner-Spülzyklus reduziert und ggf. bis zur vollständigen Regeneration des Lufttrockners, d.h. keine zumindest wesentliche Beladung des Lufttrockners mit Feuchtigkeit bleibt zurück, rückgeführt werden kann. Der Lufttrockner-Spülzyklus kann - ohne den Normalbetrieb der Niveauregelanlage zu beeinflussen - z.B. in Abhängigkeit von der Umgebungstemperatur, der Umgebungsfeuchtigkeit oder dem Umgebungsdruck des Fahrzeuges gestartet werden. Im Idealfall ist sowohl die Umgebungstemperatur als auch die Umgebungsfeuchtigkeit sehr gering, da dann der Neueintrag von Feuchtigkeit in den Lufttrockner beim Betrieb des Kompressors während des Lufttrockner-Spülzyklusses durch die zu trocknende Luft gering ist, sowie der Austrag von Feuchtigkeit höher als der Neueintrag ist. Effektiv ergibt sich somit eine Reduzierung des Feuchtigkeitsgehaltes des Lufttrockners.

Ist der Druck im Druckmittelvorratsbehälter beispielsweise höher als ein erster Grenzwert, z.B. der Mindestdruck des Druckmittelvorratsbehälters, dann kann dieser Druck verringert werden indem die Luftmenge in dem Druckmittelvorratsbehälter zur Regeneration des Lufttrockners genutzt wird. Anschließend wird der Druck in dem Druckmittelvorratsbehälter durch den Kompressor während des Lufttrockner-Spülzyklusses auf einen dritten Grenzwert z.B. den Maximaldruck des Druckmittelvorratsbehälters erhöht. Ggf. wird der Druck in dem Druckmittelvorratsbehälter wieder auf einen zweiten Grenzwert verringert und die Luftmenge zur Regeneration des Lufttrockners verwendet. Der zweite Grenzwert kann z.B. der Mindestdruck oder der Startdruck vor Beginn des Lufttrockner-Spülzyklusses in dem Druckmittelvorratsbehälter sein.

Ist der Druck im Druckmittelvorratsbehälter beispielsweise geringer als ein erster Grenzwert, z.B. der Mindestdruck des Druckmittelvorratsbehälters, dann kann dieser Druck in dem Druckmittelvorratsbehälter durch den Kompressor während des Lufttrockner-Spülzyklusses auf einen dritten Grenzwert z.B. den Maximaldruck des Druckmittelvorratsbehälters erhöht werden. Anschließend wird der Druck in dem Druckmittelvorratsbehälter wieder auf einen zweiten Grenzwert verringert und die Luftmenge zur Regeneration des Lufttrockners verwendet. Der zweite Grenzwert kann z.B. der Mindestdruck oder der Startdruck vor Beginn des Lufttrockner-Spülzyklusses in dem Druckmittelvorratsbehälter sein.

Gemäß einer Weiterbildung der Erfindung nach Anspruch 2 ist vorgesehen, dass der Lufttrockner-Spülzyklus zumindest nach den Verfahrensschritten b) bis d) wiederholt wird. Der Vorteil dieser Weiterbildung ist darin zu sehen, dass die Beladung des Lufttrockners mit Feuchtigkeit durch einen mehrfach durchgeführten Lufttrockner-Spülzyklus weiter reduziert werden kann und der Lufttrockner ggf. vollständig regeneriert werden kann.

Gemäß einer Weiterbildung der Erfindung nach Anspruch 3 ist vorgesehen, dass die Grenzbedingung in Abhängigkeit der Temperatur der Ansaugluft des Kompressors ermittelt wird. Der Vorteil dieser Weiterbildung der Erfindung ist darin zu sehen, dass die Feuchtigkeit der Ansaugluft des Kompressors mit einem einfachen und kostengünstigen Messverfahren abgeschätzt werden kann. Der Temperaturmesswert der Ansaugluft des Kompressors oder des Verbrennungsmotors des Fahrzeuges oder der Umgebungsluft wird im Fahrzeug bereits für andere Zwecke gemessen und steht über z.B. den CAN-Bus allen verbundenen Steuergeräten zur Verfügung. Der Kompressor-Spülzyklus wird insbesondere bei sehr niedrigen Temperaturen von z.B. +10°C bis +5°C oder weniger durchgeführt, da Luft im Allgemeinen bei niedrigen Temperaturen deutlich weniger Wasser, d.h. Feuchtigkeit, aufnehmen kann. Dementsprechend ist der Trocknungseffekt der angesaugten Luft bei niedrigen Temperaturen deutlich besser, d.h. die getrocknete Druckluft weist einen geringeren Feuchtigkeitsgehalt auf.

Gemäß einer Weiterbildung der Erfindung nach Anspruch 4 ist vorgesehen, dass die Grenzbedingung in Abhängigkeit der Luftfeuchtigkeit der Ansaugluft des Kompressors ermittelt wird. Der Vorteil dieser Weiterbildung der Erfindung ist darin zu sehen, dass der Lufttrockner-Spülzyklus direkt in Abhängigkeit der Luftfeuchtigkeit der Ansaugluft des Kompressors erfolgt. Somit kann mit einfachen und kostengünstigen Mitteln eine effektive Regeneration des Lufttrockners während des Spülzyklusses sichergestellt werden. Der Lufttrockners-Spülzyklus wird nur dann gestartet, wenn die Luftfeuchtigkeit einen bestimmten Wert, z.B. 20% bis 40%, nicht überschreitet. Je geringer die Luftfeuchtigkeit desto besser und effektiver erfolgt die Regeneration des Lufttrockners während des Spülzyklusses.

Gemäß einer Weiterbildung der Erfindung nach Anspruch 5 ist vorgesehen, dass der Druck in dem Druckmittelvorratsbehälter mit Hilfe des Kompressors auf ein definiertes Druckniveau gebracht wird. Der Vorteil dieser Weiterbildung der Erfindung ist darin zu sehen, dass der Druck in dem Druckmittelvorratsbehälter nach dem Lufttrockner-Spülzyklus entsprechend eingestellt wird, um einen Niveauregelvorgang durchführen zu können.

Gemäß einer Weiterbildung der Erfindung nach Anspruch 6 ist vorgesehen, dass das definierte Druckniveau in dem Druckmittelvorratsbehälter nach dem Lufttrockner-Spülzyklus dem Druckniveau in dem Druckmittelvorratsbehälter vor dem Lufttrockner-Spülzyklus entspricht. Der Vorteil dieser Weiterbildung der Erfindung ist darin zu sehen, dass der Druck in dem Druckmittelvorratsbehälter nach dem Lufttrockner-Spülzyklus entsprechend dem Startdruck eingestellt wird, sodass keine Beeinflussung der Niveauregelanlage durch den Spülzyklus erfolgt und die Luftmenge in der Niveauregelanlage konstant bleibt.

Gemäß einer Weiterbildung der Erfindung nach Anspruch 7 ist vorgesehen, dass das definierte Druckniveau in dem Druckmittelvorratsbehälter nach dem Lufttrockner-Spülzyklus dem maximalen Druckniveau in dem Druckmittelvorratsbehälter entspricht. Der Vorteil dieser Weiterbildung der Erfindung ist darin zu sehen, dass der Druck in dem Druckmittelvorratsbehälter nach dem Lufttrockner-Spülzyklus entsprechend auf den Maximaldruck eingestellt wird, um jeden beliebigen Niveauregelvorgang durchführen zu können. Diese Weiterbildung ist insbesondere für offenen Niveauregelanlage geeignet.

Gemäß einer Weiterbildung der Erfindung nach Anspruch 8 ist vorgesehen, dass der Lufttrockner-Spülzyklus außerhalb des normalen Betriebes der Niveauregelanlage durchgeführt wird. Der Vorteil dieser Weiterbildung der Erfindung ist darin zu sehen, dass eine Beeinflussung eines Niveauregelvorganges der Niveauregelanlage sicher vermieden wird. Der Lufttrockner-Spülzyklus kann beispielsweise im Stillstand des Fahrzeuges durchgeführt werden, insbesondere wenn das Fahrzeug in abends oder nachts bei kühleren Temperaturen z.B. in der Garage steht oder dgl..

Gemäß einer Weiterbildung der Erfindung nach Anspruch 9 ist vorgesehen, dass die maximal zulässige Temperatur für den Kompressor nicht erreicht wird. Der Vorteil dieser Weiterbildung der Erfindung ist darin zu sehen, dass der Kompressor nicht überhitzt wird und nach dem Lufttrockner-Spülzyklus für einen Niveauregelvorgang zur Verfügung steht. Gemäß einer Weiterbildung der Erfindung nach Anspruch 10 ist vorgesehen, dass die Regelung des Niveaus des Fahrzeuges eine höhere Priorität aufweist als der Lufttrockner-Spülzyklus. Der Vorteil dieser Weiterbildung der Erfindung ist darin zu sehen, dass der Lufttrockner-Spülzyklus abgebrochen, unterbrochen oder nicht durchgeführt wird, wenn ein Niveauregelvorgang der Niveauregelanlage ansteht bzw. durchgeführt werden soll. Dies erhöht die Fahrzeugsicherheit und den Fahrkomfort des Fahrzeuges.

Gemäß einer Weiterbildung der Erfindung nach Anspruch 11 ist vorgesehen, das Niveau des Fahrzeuges in einen unkritischen Zustand überführt wird. Der Vorteil dieser Weiterbildung der Erfindung ist darin zu sehen, dass die Fahrzeugsicherheit zu jedem Zeitpunkt gewährleistet ist. Als unkritischer Zustand ist beispielsweise das nächst tiefere Niveau oder das niedrigste Niveau des Fahrzeuges anzusehen.

Ausführungsbeispiele und weitere Vorteile der Erfindung werden im Zusammenhang mit der nachstehenden Figur erläutert, darin zeigt:

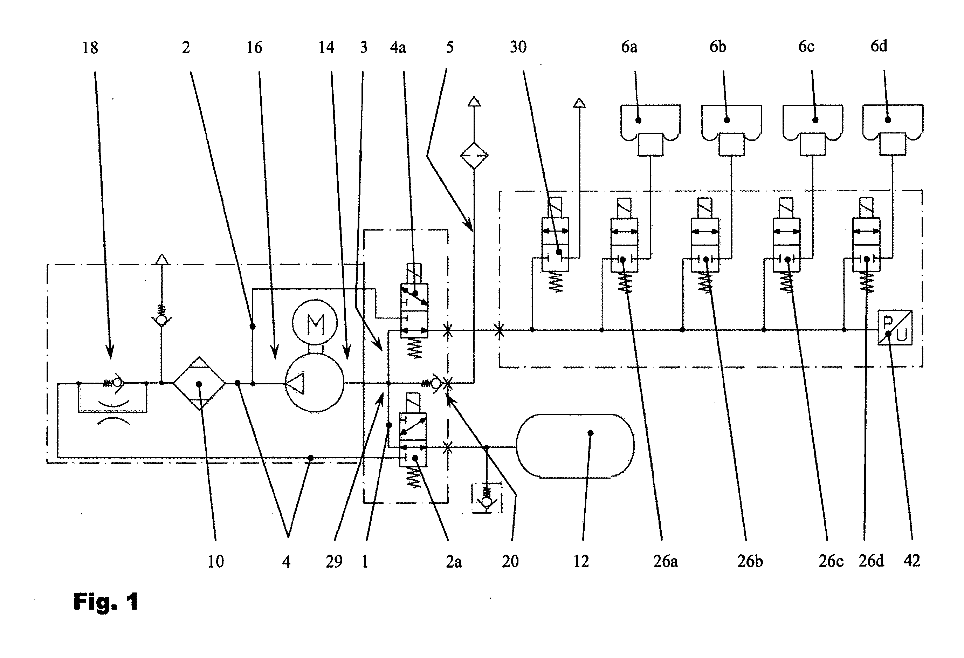

Fig. 1 Schaltbild einer pneumatischen Niveauregelanlage.

Figur 1 zeigt eine Niveauregelanlage mit einem steuerbaren 3/2-Wegeventil 2a und einem steuerbaren 3/2-Wegeventil 4a. Die Druckluftleitung 1 wird ausgehend von dem Druckmittelvorratsbehälter 12, im Folgenden Druckluftbehälter genannt, über das steuerbare Wegeventile 2a zu einem Punkt 29 geführt. Die Druckluftleitung 3 wird ausgehend von den Druckmittelkammern 6a bis 6d, im Folgenden Luftfedern genannt, über das steuerbare Wegeventil 4a ebenfalls zu dem Punkt 29 geführt, so dass die Druckluftleitung 1 und die Druckluftleitung 3 in diesem gemeinsamen Punkt 29 miteinander verbunden sind. Der gemeinsame Punkt 29 der Druckluftleitungen 1 und 3 ist direkt mit dem Kompressoreingang 14 verbunden. Eine fünfte Druckluftleitung 5 einerseits mit der Atmosphäre und andererseits mit dem Punkt 29 verbunden. In dieser fünften Druckluftleitung ist ein zum Kompressoreingang 14 hin öffnendes Rückschlagventil 20 angeordnet.

Im Folgenden werden die Funktionen der Niveauregelanlage gemäß Figur 1 erläutert. Zum Überführen von Druckluft aus der Luftfeder 6a werden zunächst die steuerbaren Wegeventile 26a und 2a von dem in der Figur 1 gezeigten Schaltzustand in den anderen Schaltzustand überführt. Die Luftfeder 6a ist dann über die Druckluftleitung 3, in der die durchgeschalteten Wegeventile 26a bis 26d und 4a liegen, mit dem Kompressoreingang 14 verbunden. Der Kompressorausgang 16 ist über die Druckluftleitung 4, in der der Lufttrockner 10, das Rückschlagventil 18 und das durchgeschaltete Wegeventil 2a liegen, mit dem Druckluftbehälter 12 verbunden. Die Luft kann also ausgehend von den Luftfedern 6a bis 6d mit Hilfe des Kompressors 8 in den Druckluftbehälter 12 überführt werden. Während dieses Vorganges ist die Druckluftleitung 2 durch das steuerbare Wegeventil 4a und die Druckluftleitung 1 durch das steuerbare Wegeventil 2a gesperrt. Zur Beendigung des Vorganges werden zumindest die steuerbaren Wegeventil 26a bis 26d wieder in den in der Figur 1 gezeigten Schaltzustand überführt.

Zum Überführen von Druckluft aus dem Druckluftbehälter 12 in die Luftfedern 6a bis 6d werden zunächst die steuerbaren Wegeventile 4a und 26a bis 26d von dem in der Figur 1 gezeigten Schaltzustand in den anderen Schaltzustand überführt. Der Druckluftbehälter 12 ist dann über die Druckluftleitung 1, in der das durchgeschaltete steuerbare Wegeventil 2a liegen, mit dem Kompressoreingang 14 verbunden. Der Kompressorausgang 16 ist über die Druckluftleitung 2, in der das durchgeschaltete steuerbare Wegeventil 4a und die steuerbaren Wegeventil 26a bis 26d liegen, mit den Luftfeder 6a bis 6d verbunden. Es kann also Druckluft von dem Druckluftbehälter 12 über den Kompressor 8 in die Luftfeder 6a überführt werden. Während dieses Vorganges ist die Druckluftleitung 3 durch das steuerbare Wegeventil 4a und die Druckluftleitung 4 durch das steuerbare Wegeventil 2a gesperrt. Zur Beendigung des Vorganges werden zumindest die steuerbaren Wegeventil 26a bis 26d wieder in den in der Figur 1 gezeigten Schaltzustand überführt.

Im Folgenden wird erläutert, wie mit Hilfe des Drucksensors 42 der Luftdruck in den Luftfedern 6a bis 6d gemessen werden kann. Während der Druckmessung soll ein Luftaustausch zwischen den Luftfedern 6a bis 6d und dem Druckluftbehälter 12 möglichst vermieden werden, um ein unbeabsichtigtes Absenken bzw. Anheben des Fahrzeugaufbaus zu vermeiden. Es ist also zu vermeiden, dass während der Druckmessung Druckluft aus den Luftfedern 6a bis 6d in den Druckluftbehälter überströmt (dies könnte passieren, wenn der Luftdruck in der zu messenden Luftfeder 6a bis 6d größer ist als der Luftdruck in dem Druckluftbehälter 12). Es ist ebenfalls zu vermeiden, dass während der Druckmessung Druckluft aus dem Druckluftbehälter 12 in die Luftfeder 6a bis 6d überströmt, deren Luftdruck gemessen wird (dies könnte passieren, wenn die Druckluft in der zu messenden Luftfeder 6a bis 6d kleiner ist als in dem Druckluftbehälter 12). Da vor der Druckmessung nicht bekannt ist, ob der Luftdruck in der zu messenden Luftfeder 6a bis 6d größer oder kleiner ist als in dem Druckluftbehälter 12, muss eine Stellung der steuerbaren Wegeventile eingestellt werden, mit der unabhängig von den Druckverhältnissen beide möglichen Fälle wirksam unterdrückt werden. Dies wird durch die in der Figur 1 gezeigte Stellung der steuerbaren Wegeventile 2a und 4a gewährleistet, wobei das steuerbare Wegeventil 2a Druckluftleitung 1 durchschaltet und die Druckluftleitung 4 sperrt und das steuerbare Wegeventil 4a die Druckluftleitung 3 durchschaltet und die Druckluftleitung 2 sperrt.

Im Folgenden wird die Druckmessung in einer der Luftfedern 6a bis 6d beispielhaft anhand der Luftfeder 6a erläutert. Zur Messung des Luftdruckes wird das steuerbare Wegeventil 26a von dem in der Figur 1 gezeigten Schaltzustand in den anderen Schaltzustand überführt, so dass die Luftfeder 6a über das steuerbare Wegeventil 26a mit dem Drucksensor 42 verbunden ist und mit dessen Hilfe der Luftdruck gemessen werden kann. Zur Beendigung der Druckmessung wird das steuerbare Wegeventil 26a wieder in den in der Figur 1 gezeigten Zustand überführt. Auf entsprechende Art und Weise wird der Luftdruck in den Luftfedern 6b bis 6d gemessen, wobei dann das entsprechende Wegeventil 26b bis 26d von dem in der Figur 1 gezeigten Schaltzustand in den anderen Schaltzustand überführt wird.

Der Druck in dem Druckluftbehälter 12 liegt in der Schaltung nach der Figur 1 und den dort beschriebenen Schaltungszuständen der Wegeventile 2a und 4a immer am Drucksensor an und kann somit immer aktuell gemessen werden. Es ist aber auch möglich, dass in den Druckluftleitungen 1 und 3 zum Kompressoreingang hin öffnende Rückschlagventil angeordnet sind. In diesem Fall wären sowohl das Wegeventil 4a als auch das Wegeventil 2a zur Messung des Drucks in dem Druckluftbehälter 12 in den zweiten, nicht gezeigten Schaltzustand zu überführen.

Zum Auffüllen des Druckluftspeichers 12 mit Luft aus der Atmosphäre ist der Kompressoreingang 14 über die Druckluftleitung 5 und das dann geöffnete Rückschlagventil 20 mit der Atmosphäre verbunden. Der Kompressorausgang 16 ist über die Druckluftleitung 4, in der der Lufttrockner 10, das Rückschlagventil 18 und das durchgeschaltete steuerbare Wegeventil 2a liegt, mit dem Druckluftbehälter 12 verbunden, so dass ein Auffüllen des Druckluftbehälters 12 mit Hilfe des Kompressors 8 mit Luft aus der Atmosphäre möglich ist. Während dieses Vorganges ist die Druckluftleitung 2 durch das steuerbare Wegeventil 4a und die Druckluftleitung 1 durch das steuerbare Wegeventil 2a gesperrt. Zur Beendigung des Vorganges werden die steuerbaren Wegeventile wieder in die in der Figur 1 gezeigten Schaltzustände überführt.

Zum Ablassen von Druckluft aus dem Druckluftbehälter 12 in die Atmosphäre werden zunächst die steuerbaren Wegeventil 2a, 4a und 30 von dem in der Figur 1 gezeigten Schaltzustand in den anderen Schaltzustand überführt. Der Druckluftbehälter 12 ist dann über das steuerbare Wegeventil 2a, die Drossel 18, den Lufttrockner 10, die Leitung 2, das steuerbare Wegeventil 4a und das steuerbare Wegeventil 30 mit der Atmosphäre verbunden, so dass Druckluft aus dem Druckluftvorratsbehälter 12 in diese strömen kann. Hierbei wird die Druckluft über den Lufttrockner 10 geführt, so dass dieser regeneriert werden kann.

Die Niveauregelanlage wird von einem nicht gezeigten Steuergerät geregelt oder gesteuert. Das Steuergerät ist beispielsweise über eine CAN-Bus-Leitung mit einem weiteren Steuergerät des Fahrzeuges verbunden, welches die Umgebungstemperatur ermittelt. Ist die ermittelte Umgebungstemperatur geringer als ein vorgegebener Wert, z.B. +10°C, und liegt keine Anforderung zur Niveauveränderung vor, weil das Fahrzeug beispielsweise abends in der Garage oder auf einem Parkplatz steht, dann wird der Lufttrockner-Spülzyklus gestartet. Anschließend wird der Druck in dem Druckmittelvorratsbehälter 12 ermittelt. Ist der Druck höher als ein erster Grenzwert, z.B. 10 bar oder der Mindestdruck in dem Druckmittelvorratsbehälter 12, dann wird der Druck in dem Druckmittelvorratsbehälter 12 auf einen zweiten Grenzwert, z.B. den Mindestdruck des Druckmittelvorratsbehälters 12, verringert und die Luftmenge zur Regeneration des Lufttrockners 10 verwendet. Anschließend wird der Druck in dem Druckmittelvorratsbehälter 12 wieder auf ein definiertes Niveau, entweder den Startdruck oder den Maximaldruck des Druckmittelvorratsbehälters 12, gebracht.

Ist der Druck geringer als ein erster Grenzwert, z.B. 10 bar oder der Maximaldruck in dem Druckmittelvorratsbehälter 12, dann wird der Druck in dem Druckmittelvorratsbehälter 12 durch den Kompressor 8 und über den Lufttrockner 10 bis zu einem dritten Grenzwert, z.B. den Maximaldruck in dem Druckmittelvorratsbehälter 12, erhöht. Dann wird der Druck in dem Druckmittelvorratsbehälter 12 auf einen zweiten Grenzwert, z.B. den Mindestdruck in dem Druckmittelvorratsbehälter12, verringert und die Luftmenge wird zur Regeneration des Lufttrockners 10 verwendet. Anschließend wird der Druck in dem Druckmittelvorratsbehälter 12 wieder auf ein definiertes Niveau, entweder den Startdruck oder den Maximaldruck des Druckmittelvorratsbehälters 12, gebracht.

Anstatt der im Fahrzeug vorhandenen Umgebungstemperatur kann auch die Umgebungsfeuchtigkeit oder die Luftfeuchtigkeit bzw. die Temperatur der Ansaugluft des Kompressors 8 als Grenzbedingung verwendet werden. Dazu kann das Steuergerät der Niveauregelanlage mit den entsprechenden Messmitteln verbunden werden und diese direkt ermitteln. Die Grenzbedingung setzt voraus, dass die angesaugte Luft einen geringeren Wassergehalt aufweist als dieser im Normalbetrieb der Niveauregelanlage vorhanden war, was bei niedrigen Temperaturen oder einer geringen Luftfeuchtigkeit oder einem hohen Luftdruck der Fall ist.

Es ist auch möglich den Parameter der Grenzbedingung, z.B. die Temperatur oder die Luftfeuchtigkeit, zu ermitteln und zu speichern, wenn ein sogenannter Leckageausgleich oder eine Auffüllung des Druckmittelvorratsbehälters 12 durch die Niveauregelanlage durchgeführt wird. Sinkt der aktuell ermittelte Messwert des Parameters wesentlich unterhalb des gespeicherten Messwertes des Parameters ab bzw. erreicht eine vorgegebene Abweichung oder unterschreitet die vorgegebene Grenzbedingung, dann wird der Lufttrockner-Spülzyklus gestartet. Die Luft weist zum Startzeitpunkt des Lufttrockner-Spülzyklusses einen wesentlich geringeren Wassergehalt auf, als zum Zeitpunkt des Leckageausgleichs bzw. der Auffüllung des Druckmittelvorratsbehälters 12. Dies führt zu einer effektiven Regeneration des Trockenmediums des Lufttrockners 10.

### Bezugszeichenliste

- 1 -: Erste Druckluftleitung
- 2 -: Zweite Druckluftleitung
- 2a -: Wegeventil
- 3 -: Dritte Druckluftleitung
- 4 -: Vierte Druckluftleitung
- 4a -: Wegeventil
- 5 -: Fünfte Luftleitung
- 6a -: Druckmittelkammer
- 6b -: Druckmittelkammer
- 6c -: Druckmittelkammer
- 6d -: Druckmittelkammer
- 8 -: Kompressor
- 10 -: Lufttrockner
- 12 -: Druckmittelvorratsbehälter
- 14 -: Kompressoreingang
- 16 -: Kompressorausgang
- 18 -: Ventil
- 20 -: Rückschlagventil
- 26a -: Wegeventil
- 26b -: Wegeventil
- 26c -: Wegeventil
- 26d -: Wegeventil
- 29 -: Punkt zur Verbindung von Druckluftleitungen
- 30 -: Wegeventil
- 42 -: Drucksensor

## Patentansprüche

1. Verfahren zum Trocknen der Druckluft in einer Niveauregelanlage eines Fahrzeuges, welche einen Kompressor (8), einen Lufttrockner (10), einen Drucksensor (42), einen Druckmittelvorratsbehälter (12) und eine Druckmittelkammer (6a bis 6d) aufweist,
**dadurch gekennzeichnet, dass**
a) unterhalb einer Grenzbedingung ein Lufttrockner-Spülzyklus eingeleitet wird, wobei als Grenzbedingung eine vorgegebene Umgebungstemperatur, ein vorgegebener Umgebungsdruck, eine vorgegebene Umgebungsfeuchtigkeit oder eine vorgegebene Luftfeuchtigkeit bzw. eine vorgegebene Temperatur der Ansaugluft des Kompressors (8) vorgesehen ist,
b) der Druck in dem Druckmittelvorratsbehälter (12) ermittelt wird,
c) wenn der Druck in dem Druckmittelvorratsbehälter (12) einen ersten Grenzwert überschreitet, Druckluft über den Lufttrockner (10) bis zu einem zweiten Grenzwert des Druckes in dem Druckmittelvorratsbehälter (12) in die Atmosphäre abgelassen wird, oder
d) wenn der Druck in dem Druckmittelvorratsbehälter (12) einen ersten Grenzwert unterschreitet, Druckluft von dem Kompressor (8) über den Lufttrockner (10) in den Druckmittelvorratsbehälter (12) bis zu einem dritten Grenzwert des Druckes in dem Druckmittelvorratsbehälter (12) gefördert wird und anschließend Druckluft von dem Druckmittelvorratsbehälter (12) über den Lufttrockner (10) bis zu einem zweiten Grenzwert des Druckes in dem Druckmittelvorratsbehälter (12) in die Atmosphäre abgelassen wird.

2. Verfahren zum Trocknen der Luft in einer Niveauregelanlage eines Fahrzeuges nach Anspruch 1, **dadurch gekennzeichnet, dass** der Lufttrockner-Spülzyklus zumindest nach den Verfahrensschritten b) bis d) wiederholt wird.

3. Verfahren zum Trocknen der Luft in einer Niveauregelanlage eines Fahrzeuges nach Anspruch 1 oder 2, **dadurch gekennzeichnet, dass** die Grenzbedingung in Abhängigkeit der Temperatur der Ansaugluft des Kompressors (8) ermittelt wird.

4. Verfahren zum Trocknen der Luft in einer Niveauregelanlage eines Fahrzeuges nach Anspruch 1, 2 oder 3, **dadurch gekennzeichnet, dass** die Grenzbedingung in Abhängigkeit der Luftfeuchtigkeit der Ansaugluft des Kompressors (8) ermittelt wird.

5. Verfahren zum Trocknen der Luft in einer Niveauregelanlage eines Fahrzeuges nach einem der vorherigen Ansprüche, **dadurch gekennzeichnet, dass** der Druck in dem Druckmittelvorratsbehälter (12) mit Hilfe des Kompressors (8) auf ein definiertes Druckniveau gebracht wird.

6. Verfahren zum Trocknen der Luft in einer Niveauregelanlage eines Fahrzeuges nach einem der vorherigen Ansprüche, **dadurch gekennzeichnet, dass** das definierte Druckniveau in dem Druckmittelvorratsbehälter (12) nach dem Lufttrockner-Spülzyklus dem Druckniveau in dem Druckmittelvorratsbehälter (12) vor dem Lufttrockner-Spülzyklus entspricht.

7. Verfahren zum Trocknen der Luft in einer Niveauregelanlage eines Fahrzeuges nach einem der vorherigen Ansprüche, **dadurch gekennzeichnet, dass** das definierte Druckniveau in dem Druckmittelvorratsbehälter (12) nach dem Lufttrockner-Spülzyklus dem maximalen Druckniveau in dem Druckmittelvorratsbehälter (12) entspricht.

8. Verfahren zum Trocknen der Luft in einer Niveauregelanlage eines Fahrzeuges nach einem der vorherigen Ansprüche, **dadurch gekennzeichnet, dass** das der Lufttrockner-Spülzyklus außerhalb des normalen Betriebes der Niveauregelanlage durchgeführt wird.

9. Verfahren zum Trocknen der Luft in einer Niveauregelanlage eines Fahrzeuges nach einem der vorherigen Ansprüche, **dadurch gekennzeichnet, dass** die maximal zulässige Temperatur für den Kompressor (8) nicht erreicht wird.

10. Verfahren zum Trocknen der Luft in einer Niveauregelanlage eines Fahrzeuges nach einem der vorherigen Ansprüche, **dadurch gekennzeichnet, dass** die Regelung des Niveaus des Fahrzeuges eine höhere Priorität aufweist als der Lufttrockner-Spülzyklus.

11. Verfahren zum Trocknen der Luft in einer Niveauregelanlage eines Fahrzeuges nach Anspruch 9, **dadurch gekennzeichnet, dass**
das Niveau des Fahrzeuges in einen unkritischen Zustand überführt wird.

## Claims

1. Method for drying the compressed air in a levelling system of a vehicle, which levelling system has a compressor (8), an air dryer (10), a pressure sensor (42), a pressure-medium reservoir (12) and a pressure-medium chamber (6a to 6d),
**characterized in that**
a) an air-dryer scavenging cycle is initiated below a limiting condition, the limiting condition provided being a stipulated ambient temperature, a stipulated ambient pressure, a stipulated ambient humidity or a stipulated air humidity or stipulated temperature of the intake air of the compressor (8),
b) the pressure in the pressure-medium reservoir (12) is determined,
c) if the pressure in the pressure-medium reservoir (12) overshoots a first limit value, compressed air is discharged into the atmosphere via the air dryer (10) up to a second limit value of the pressure in the pressure-medium reservoir (12), or
d) if the pressure in the pressure-medium reservoir (12) undershoots a first limit value, compressed air is conveyed into the pressure-medium reservoir (12) by the compressor (8) via the air dryer (10) up to a third limit value of the pressure in the pressure-medium reservoir (12), and subsequently compressed air is discharged from the pressure-medium reservoir (12) into the atmosphere via the air dryer (10) up to a second limit value of the pressure in the pressure medium reservoir (12).

2. Method for drying the air in a levelling system of a vehicle according to Claim 1, **characterized in that** the air-dyer scavenging cycle is repeated at least after method steps b) to d).

3. Method for drying the air in a levelling system of a vehicle according to Claim 1 or 2, **characterized in that** the limiting condition is determined as a function of the temperature of the intake air of the compressor (8).

4. Method for drying the air in a levelling system of a vehicle according to Claim 1, 2 or 3, **characterized in that** the limiting condition is determined as a function of the air humidity of the intake air of the compressor (8).

5. Method for drying the air in a levelling system of a vehicle according to one of the preceding claims, **characterized in that** the pressure in the pressure-medium reservoir (12) is brought to a defined pressure level with the aid of the compressor (8).

6. Method for drying the air in a levelling system of a vehicle according to one of the preceding claims, **characterized in that** the defined pressure level in the pressure-medium reservoir (12) after the air-dryer scavenging cycle corresponds to the pressure level in the pressure-medium reservoir (12) before the air-dryer scavenging cycle.

7. Method for drying the air in a levelling system of a vehicle according to one of the preceding claims, **characterized in that** the defined pressure level in the pressure-medium reservoir (12) after the air-dryer scavenging cycle corresponds to the maximum pressure level in the pressure-medium reservoir (12).

8. Method for drying the air in a levelling system of a vehicle according to one of the preceding claims, **characterized in that** the air-dryer scavenging cycle is performed outside the normal operation of the levelling system.

9. Method for drying the air in a levelling system of a vehicle according to one of the preceding claims, **characterized in that** the maximum permissible temperature for the compressor (8) is not reached.

10. Method for drying the air in a levelling system of a vehicle according to one of the preceding claims, **characterized in that** the regulation of the level of the vehicle has higher priority than the air-dryer scavenging cycle.

11. Method for drying the air in a levelling system of a vehicle according to Claim 9, **characterized in that** the level of the vehicle is converted to a non-critical state.

## Revendications

1. Procédé de séchage d'air sous pression dans une installation de réglage de niveau d'un véhicule, laquelle présente un compresseur (8), un sécheur d'air (10), un capteur de pression (42), un réservoir de fluide sous pression (12) et une chambre de fluide sous pression (6a à 6d),
**caractérisé en ce que**
a) en dessous d'une condition limite, un cycle de rinçage du sécheur d'air est amorcé, une température prédéfinie de l'environnement, une pression prédéfinie de l'environnement, une humidité prédéfinie de l'environnement ou une humidité de l'air prédéfinie ou une température prédéfinie de l'air d'admission du compresseur (8) étant prévues en tant que condition limite,
b) la pression dans le réservoir de fluide sous pression (12) est déterminée,
c) si la pression dans le réservoir de fluide sous pression (12) dépasse une première valeur limite, de l'air sous pression est évacué dans l'atmosphère par le biais du sécheur d'air (10) jusqu'à une deuxième valeur limite de la pression dans le réservoir de fluide sous pression (12), ou
d) si la pression dans le réservoir de fluide sous pression (12) est inférieure à une première valeur limite, de l'air sous pression est acheminé depuis le compresseur (8) par le biais du sécheur d'air (10) dans le réservoir de fluide sous pression (12) jusqu'à une troisième valeur limite de la pression dans le réservoir de fluide sous pression (12) et ensuite de l'air sous pression est évacué dans l'atmosphère depuis le réservoir de fluide sous pression (12) par le biais du sécheur d'air (10) jusqu'à une deuxième valeur limite de la pression dans le réservoir de fluide sous pression (12).

2. Procédé de séchage d'air dans une installation de réglage de niveau d'un véhicule selon la revendication 1, **caractérisé en ce que** le cycle de rinçage du sécheur d'air est répété au moins après les étapes de procédé b) à d).

3. Procédé de séchage d'air dans une installation de réglage de niveau d'un véhicule selon la revendication 1 ou 2, **caractérisé en ce que** la condition limite est déterminée en fonction de la température de l'air d'admission du compresseur (8).

4. Procédé de séchage d'air dans une installation de réglage de niveau d'un véhicule selon la revendication 1, 2 ou 3, **caractérisé en ce que** la condition limite est déterminée en fonction de l'humidité de l'air d'admission du compresseur (8).

5. Procédé de séchage d'air dans une installation de réglage de niveau d'un véhicule selon l'une quelconque des revendications précédentes, **caractérisé en ce que** la pression dans le réservoir de fluide sous pression (12) est amenée à un niveau de pression défini à l'aide du compresseur (8).

6. Procédé de séchage d'air dans une installation de réglage de niveau d'un véhicule selon l'une quelconque des revendications précédentes, **caractérisé en ce que** le niveau de pression défini dans le réservoir de fluide sous pression (12) après le cycle de rinçage du sécheur d'air correspond au niveau de pression dans le réservoir de fluide sous pression (12) avant le cycle de rinçage du sécheur d'air.

7. Procédé de séchage d'air dans une installation de réglage de niveau d'un véhicule selon l'une quelconque des revendications précédentes, **caractérisé en ce que** le niveau de pression défini dans le réservoir de fluide sous pression (12) après le cycle de rinçage du sécheur d'air correspond au niveau de pression maximum dans le réservoir de fluide sous pression (12).

8. Procédé de séchage d'air dans une installation de réglage de niveau d'un véhicule selon l'une quelconque des revendications précédentes, **caractérisé en ce que** le cycle de rinçage du sécheur d'air est effectué en dehors du fonctionnement normal de l'installation de réglage de niveau.

9. Procédé de séchage d'air dans une installation de réglage de niveau d'un véhicule selon l'une quelconque des revendications précédentes, **caractérisé en ce que** la température maximale admissible pour le compresseur (8) n'est pas atteinte.

10. Procédé de séchage d'air dans une installation de réglage de niveau d'un véhicule selon l'une quelconque des revendications précédentes, **caractérisé en ce que** la régulation du niveau du véhicule présente une priorité plus élevée que le cycle de rinçage du sécheur d'air.

11. Procédé de séchage d'air dans une installation de réglage de niveau d'un véhicule selon la revendication 9, **caractérisé en ce que** le niveau du véhicule est transféré à un état non critique.
